**Europäisches Patentamt**

**European Patent Office**

**Office européen des brevets**

(19)

(11) Veröffentlichungsnummer: **0 005 270**
**B1**

(12) **EUROPÄISCHE PATENTSCHRIFT**

(45) Veröffentlichungstag der Patentschrift:
05.08.81

(51) Int. Cl.³: **C 02 F 1/20**, B 01 D 53/34

(21) Anmeldenummer: **79101344.4**

(22) Anmeldetag: **03.05.79**

(54) **Verfahren zur Entfernung von Schwefeldioxid aus Abwässern und gegebenenfalls Abgasen.**

(30) Priorität: **08.05.78 DE 2819994**

(43) Veröffentlichungstag der Anmeldung:
**14.11.79 Patentblatt 79/23**

(45) Bekanntmachung des Hinweises auf die Patenterteilung:
**05.08.81 Patentblatt 81/31**

(84) Benannte Vertragsstaaten:
**AT BE DE GB IT NL**

(56) Entgegenhaltungen:
**DE-A-1 932 100**
**DE-A-2 324 547**
**DE-A-2 717 140**
**DE-C-519 616**
**FR-A-2 260 532**
**FR-A-2 393 601**

(73) Patentinhaber: **BASF Aktiengesellschaft,**
**Carl-Bosch-Strasse 38, D-6700 Ludwigshafen (DE)**

(72) Erfinder: **Decker, Emile De, Josef Copstraat 4 (Bus 1),**
**B-2710 Hoboken (BE)**
Erfinder: **Neubauer, Gerald, Dr., Jozef Mulslaan 27,**
**B-2080 Kapellen (BE)**
Erfinder: **Pijl, Paul, Koninglaan 32, B-2180 Kalmthout (BE)**
Erfinder: **Wauwe, Gerard van, Josef de Veusterstraat 140,**
**B-2520 Edegem (BE)**

## Verfahren zur Entfernung von Schwefeldioxid aus Abwässern und gegebenenfalls Abgasen

Vorliegende Erfindung betrifft ein Verfahren zur Entfernung von Schwefeldioxid aus $SO_2$-haltigen Abwässern und ggf. Abgasen.

Bei chemischen Prozessen oder Verbrennungen fallen häufig unerwünschte Mengen an Schwefeldioxid an, die normalerweise in Abgase oder Abwässer der Fabrikationsanlagen gelangen. Aus Gründen der Reinhaltung der Umwelt muss das Schwefeldioxid aus diesen Abgasen oder Abwässern entfernt werden, und es sind schon zahlreiche Verfahren hierfür vorgeschlagen worden.

Zur Entfernung von Schwefeldioxid aus Abgasen ist es bekannt, das $SO_2$ an basisch reagierenden Feststoffen, z.B. an Kupferoxid oder Magnesiumoxid zu absorbieren; diese Verfahren sind jedoch sehr aufwendig durchzuführen und haben den Nachteil, dass durch Abrieb des Absorptionsmittels zusätzliche Störungen auftreten können. Aus diesem Grunde sind auch Nassprozesse zur Absorption von Schwefeldioxid entwickelt worden, wobei man wässerige Suspensionen von Kalk oder Kalkstein einsetzt, wobei als Umsetzungsprodukt eine Mischung von Calciumsulfat/-Sulfit gewonnen wird, die jedoch in der Regel nicht verwertet werden kann und deponiert werden muss, was schliesslich lediglich zu einer Verlagerung der Umweltprobleme führt.

Die neueren Verfahren, die bei der Rauchgasaufarbeitung zur Anwendung kommen sollen, sind rückgewinnende Verfahren, was die Absorptionsmittel betrifft. Als Absorptionsmittel werden neben Natriumcarbonat und Natriumcitrat vor allem Ammoniak vorgeschlagen (DE-B 2407911). Bei der Verwendung von wässerigem Ammoniak als Absorptionsmittel unterscheidet man zwei Kategorien von Verfahren, nämlich
a) solche Verfahren, bei denen die Produkte, die bei der Umsetzung des Schwefeldioxids mit der ammoniakalischen Waschflüssigkeit gebildet werden, als Ammoniumverbindungen gewonnen werden, die für Düngemittel oder andere Zwecke eingesetzt werden können, und
b) solche als regenerative Verfahren bezeichnete Verfahren, bei deren Durchführung die Umsetzungsprodukte wieder in Ammoniak und Schwefeldioxide zersetzt werden, wobei das Ammoniak erneut als Absorptionsmittel eingesetzt und die Schwefeloxide zu Schwefelsäure aufgearbeitet werden.

Bei der ersten Verfahrensgruppe fallen Lösungen an, die im wesentlichen Ammoniumsulfit und in geringerem Umfang auch Ammoniumsulfat enthalten, das entweder aus in den Abgasen enthaltenem Schwefeltrioxid oder durch Oxidation des Ammoniumsulfits entstanden ist. Für solche Ammoniumsulfit enthaltende Lösungen besteht aber in der Regel keine Verwertungsmöglichkeit, und es muss das Ammoniumsulfit zu Sulfat oxidiert werden, das ohne weiteres z.B. in Düngemittel eingearbeitet werden kann. Die Oxidation des Ammoniumsulfits in wässeriger Lösung erfolgt jedoch unter Normalbedingungen sehr langsam. Zur Beschleunigung der Reaktion kann man die Umsetzung bei erhöhten Drucken oder Temperaturen durchführen, was jedoch aufwendig ist, oder man führt die Umsetzung bei Normalbedingungen in Gegenwart von Katalysatoren durch. Als Katalysatoren sind Kobalt- oder Eisensalze (deutsche Patentschrift 801 837) oder Aktivkohlen (deutsche Patentschrift 1 135 433) bekannt geworden. Diese mit Katalysatoren durchgeführten Verfahren haben den Nachteil, dass die erhaltenen Ammoniumsulfatlösungen mit den in gelöster oder suspendierter Form vorliegenden Katalysatoren verunreinigt sind, deren Entfernung mit zusätzlichen Kosten verbunden ist.

Die bekannten Verfahren lassen sich prinzipiell auch durch Vorschalten einer weiteren Verfahrensstufe für die Aufarbeitung von Schwefeldioxid enthaltenden Abwässern einsetzen, indem das Schwefeldioxid mit einem Trägergas, z.B. Luft, aus der Lösung ausgeblasen wird.

Es sind schliesslich auch Verfahren bekannt geworden, bei denen das in den Abgasen enthaltene Schwefeldioxid auf Gips aufgearbeitet wird. So wird in der DE-A 2324547 ein Verfahren beschrieben, bei dem das Schwefeldioxid in einer Ammoniumsulfit, -bisulfit und -sulfat enthaltenden Lösung absorbiert wird, die Absorptionslösung in Gegenwart von Calciumsulfat-Dihydrat mit Kalkmilch unter Freisetzung von Ammoniak umgesetzt und in der erhaltenen Calciumsulfit/Calciumsulfat-Aufschlämmung durch Einblasen von Luft das Calciumsulfit in Calciumsulfat-Dihydrat überführt wird. In der französischen Patentschrift 2393601 ist ebenfalls ein Verfahren zur Entfernung von $SO_2$ aus Abgasen unter Gewinnung von Gips beschrieben, bei dem zunächst das $SO_2$ in einer Lösung eines Alkalisalzes einer organischen Säure absorbiert wird und anschliessend durch Behandeln mit Sauerstoff oder einem sauerstoffhaltigen Gas unter gleichzeitiger Zugabe einer Calciumverbindung Gips ausfällt. Diese recht aufwendigen Verfahren haben den Nachteil, dass das in den Abgasen enthaltene Schwefeldioxid letztlich in Gips umgewandelt wird, für den, wie eingangs erwähnt, in der Regel keine Verwertungsmöglichkeiten bestehen, so dass er deponiert werden muss.

Der vorliegenden Erfindung lag die Aufgabe zugrunde, ein Verfahren zur Entfernung von Schwefeldioxid aus Schwefeldioxid enthaltenden Abwässern (gegebenenfalls in Kombination mit der Entfernung von Schwefeldioxid aus solches enthaltenden Abgasen) unter Gewinnung von wässerigen Lösungen von Ammonium- oder Alkalisulfaten bereitzustellen, bei dem man in kurzen Verweilzeiten und ohne Anwendung von Katalysatoren Ammonium- bzw. Alkalisulfatlösungen erhält.

Es wurde gefunden, dass diese Aufgabe dadurch gelöst werden kann, dass man aus den Abwässern das Schwefeldioxid insbesondere mit Luft ausbläst, aus den hierbei erhaltenen schwefeldioxidhaltigen Ausblasegasen, die Luft enthalten, in einer im Kreislauf geführten wässrigen Ammonium- oder Alkali-Sulfit/-Sulfat enthaltenden Lösung, deren pH-Wert durch Zusatz von Ammoniak oder Alkalihydroxiden auf einem Wert von 5 bis 7 gehalten wird, bei Temperaturen von oberhalb 15°C bis zum Siedepunkt in einer Zone hoher Flüssigkeitsturbulenz, wie sie bei der Vermischung in Saugstrahlen oder Wasserringpumpen gewährleistet ist, das Schwefeldioxid absorbiert und teilweise oxidiert, aus dem Kreislauf Lösung abzieht und durch frische Lösung ergänzt und das in der abgezogenen Lösung nicht zu Sulfat oxidierte Sulfit in einer weiteren Stufe mit sauerstoffhaltigen Gasen zu Sulfat oxidiert und die erhaltene sulfathaltige Lösung abzieht.

Bei dem erfindungsgemässen Verfahren erhält man direkt bei kurzen Veweilzeiten und ohne Anwendung von Katalysatoren weitgehend $SO_2$-freie Lösungen von Ammoniumsulfat bzw. Natrium- oder Kaliumsulfat in Abhängigkeit davon, ob man zur Absorption und Aufrechterhaltung des pH-Wertes Ammoniak, Natron- oder Kalilauge einsetzt. Ein wesentlicher weiterer Vorteil des erfindungsgemässen Verfahrens besteht darin, dass es nicht nur für die Aufarbeitung von Abwässern geeignet ist, sondern dass gleichzeitig auch $SO_2$-haltige Abgase verarbeitet werden können. Dies ist besonders dann interessant, wenn im Rahmen einer Fabrikanlage aus mehreren grösseren und kleineren Quellen $SO_2$-haltige Abgase und Abwässer anfallen.

Die $SO_2$-haltigen Abgase können im Rahmen des erfindungsgemässen Verfahrens den $SO_2$-haltigen Ausblasegasen zugefügt werden, bevor sie mit der Sulfit-Sulfat-Lösung in Berührung kommen oder auch direkt in den Sulfit-Sulfat-Lösungskreislauf eingebracht werden. Ferner besteht die Möglichkeit, aus der ausgeblasenen Lösung etwa noch enthaltene Schwefelverbindungen abzutrennen, z.B. indem man die Lösung in einer Verbrennungskammer behandelt und die dabei gebildeten Schwefeloxide zusammen mit dem Ausblasegas der erfindungsgemässen Absorption unterwirft. Es ist selbstverständlich auch möglich, mehrere Absorptionsstellen vorzusehen, die aus einem Kreislauf des sulfit-/sulfathaltigen Lösungsmittels unabhängig voneinander mit Lösungsmittel beaufschlagt werden.

Für das Ausblasen der Abwässer wird insbesondere Luft verwendet, deren Menge man zweckmässig so bemisst, dass deren Sauerstoffgehalt ausreicht, um in der Absorptionsstufe das Sulfit zu Sulfat zu oxidieren. Damit ist sichergestellt, das in der Absorptionsstufe stets mehr als ausreichend Sauerstoff für diese Oxidation vorhanden ist, da in dieser Stufe, wie weiter unten ausgeführt, nur bis zu etwa 80% des Sulfits oxidiert wird. Auf diese Weise entfällt die Notwendigkeit, dem Ausblasegas weitere für die Oxidation benötigte Luft zuzusetzen. Bei Normaldruck wird das Ausblasen zweckmässigerweise bei Temperaturen oberhalb 80°C, aber unterhalb des Siedepunktes des Abwassers durchgeführt. In der Kreislauflösung wird zweckmässig eine Temperatur von oberhalb 15°C bis zum Siedepunkt und ein pH-Wert durch Zugabe von Alkalien, z.B. Ammoniak, Kalilauge oder Natronlauge, von 5 bis 7 eingehalten. Wesentlich ist, dass die Vermischung des $SO_2$ enthaltenden Ausblasegases mit der Luft und der Sulfit/Sulfat enthaltenden Lösung in einer Zone hoher Flüssigkeitsturbulenz erfolgt und somit sehr intensiv ist. Zweckmässig erfolgt die Vermischung in Saugstrahlern oder Wasserringpumpen und dgl., die diese intensive Vermischung von Gas und Flüssigkeit gewährleisten. Unter Einhaltung der erfindungsgemässen Bedingungen gelingt es, schon in dieser Stufe einen wesentlichen Teil des Sulfits, das sich bei der Absorption des Schwefeldioxids in der Lösung gebildet hat, zu oxidieren. Da die Verweilzeiten in dieser Stufe gering sind und nur etwa einige Sekunden betragen, erfolgt die Umsetzung mit hohen Raum-Zeit-Ausbeuten. Die Sulfit-Sulfat-Lösung sollte insgesamt eine Konzentration von 45 Gewichtsprozent nicht überschreiten, um ein Ausscheiden von Feststoffen zu vermeiden. Zweckmässig hält man die $SO_4^-$-Konzentration bei 7 bis 15 Gewichtsprozent, die $SO_3^-$-Konzentration auf 0,5 bis 8, vorzugsweise 0,5 bis 2,5 Gewichtsprozent. Es gelingt auf diese Weise in Abhängigkeit von den einzuhaltenden Bedingungen bis zu 80% des Sulfits zu oxidieren.

Aus dem Kreislauf wird zweckmässig kontinuierlich Lösung abgezogen und durch frische Absorptionslösung, d.h. durch Wasser und die für die Aufrechterhaltung des pH-Wertes erforderliche Lauge bzw. Ammoniak, ergänzt.

Die abgezogene Lösung wird zwecks Oxidation des noch nicht umgewandelten restlichen Sulfits in einer weiteren Stufe mit sauerstoffhaltigen Gasen, insbesondere Luft, behandelt.

Vorteilhaft wird diese Behandlung bei pH-Werten von 4 bis 7 und Temperaturen von 20 bis zum Siedepunkt der Lösung durchgeführt. Die $SO_4^-$-Konzentration sollte in dieser Stufe vorteilhaft bei 7 bis 25 Gewichtsprozent liegen. Die Behandlung kann hier beispielsweise in mit Füllkörpern beschickten Türmen oder Siebbodenkolonnen durchgeführt werden. Auf diese Weise gelingt es, Sulfatlösungen aus dieser Stufe abzuziehen, die weniger als 0,1 Gewichtsprozent Sulfit enthalten.

Beispiel 1

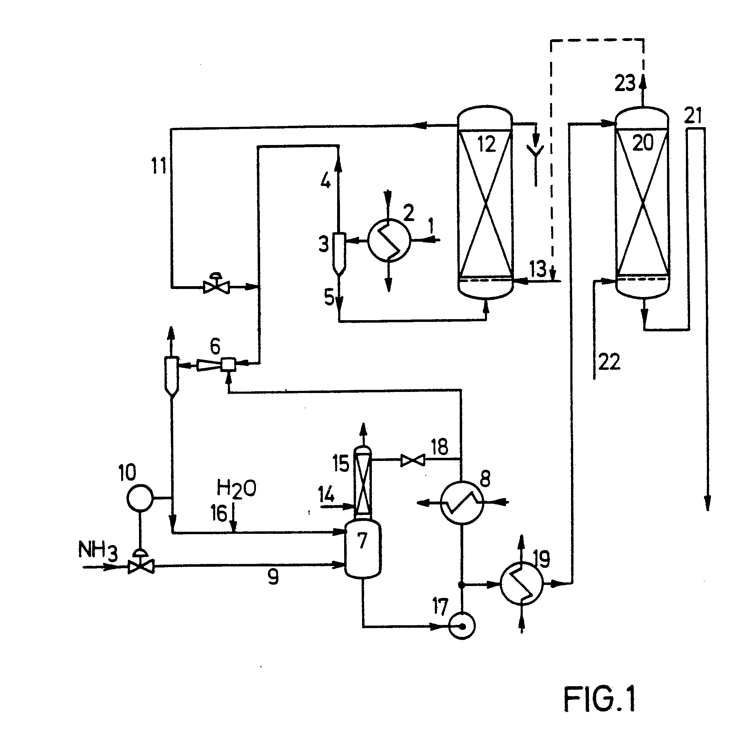

Gemäss Fig. 1 werden Schwefeldioxid enthaltende Brüden durch Leitung 1 einem Brüdenkondensator 2 zugeführt und in einem Abscheider 3 in ein $SO_2$-haltiges Abgas 4 und ein $SO_2$-haltiges Abwasser 5 getrennt.

Das Abgas 4, das in einer Menge von 100 Nm³/ Stunde anfällt und 33 kg Schwefeldioxid enthält, wird einem Saugstrahler 6 zugeführt und hier mit Luft, die, wie weiter unten beschrieben, durch Leitung 11 dem Abgas zugeführt wird, innig vermischt. An diesen Saugstrahler 6 ist ein Flüssigkeitskreislauf angeschlossen, im wesentlichen bestehend aus der Vorlage 7, der Pumpe 17 und dem Kühler 8. Die Kreislaufflüssigkeit wird durch Zudosieren von stündlich 20 kg Ammoniak durch Leitung 9 in die Vorlage 7, das durch den Regler 10 gesteuert wird, auf einem pH-Wert von etwa 6,5 gehalten. Mittels des Wärmetauschers 8 wird die Temperatur der Kreislaufflüssigkeit auf 35 bis 40°C, der $SO_4^-$-Gehalt bei 8 bis 14 Gewichtsprozent und der $SO_3^-$-Gehalt bei 1,5 bis 2,5 Gewichtsprozent gehalten.

Im Abscheider 3 fallen stündlich etwa 70 bis 90°C heisse Brüdenabwässer 5 an, die 5 kg Schwefeldioxid und 2,2 kg Ammoniak in Form einer Sulfit-Bisulfit-Lösung mit einem pH-Wert von 4,5 enthalten. Diese Abwässer werden in eine Kolonne 12 geleitet, die mit Füllkörpern versehen ist, in die durch Leitung 13 stündlich 20 Nm³ Luft eingeblasen werden. Die durch Leitung 11 abgezogene Luft enthält 2 kg Schwefeldioxid/Stunde und wird mit dem Abgas 4 vermischt dem Saugstrahler 6 zugeführt. Das aus der Kolonne 12 ablaufende Abwasser enthält 4,5 kg/Stunde $SO_4^-$, entstanden durch Oxidation der restlichen 3 kg $SO_2$. Der $SO_2$-Restgehalt im Abwasser liegt unter 1%.

In dem Saugstrahler 6 werden stündlich 22 kg des eingebrachten Schwefeldioxids zu $SO_4^-$ oxidiert. Die restlichen 13 kg $SO_2$ werden, gelöst in der Kreislaufflüssigkeit, zusammen mit weiteren 3 kg Schwefeldioxid, die aus einem anderen Prozessabgas stammen, über einen Wärmeaustauscher 19 dem Oxidationsturm 20 zugeführt. Dieses Abgas wird durch Leitung 14 einem Waschturm 15 zugeführt und dort in einem Teilstrom 18 des Flüssigkeitskreislaufes des Saugstrahlers 6 absorbiert. Der Flüssigkeitsablauf 21 aus dem Oxidationsturm 20 wird so eingestellt, dass eine Verweilzeit der Flüssigkeit von mindestens einer Stunde erzielt wird und eine $SO_4^-$-Konzentration von 8 bis 18 Gewichtsprozent in der Flüssigkeit und eine $SO_3^-$-Konzentration von 0,1 Gewichtsprozent aufrechterhalten wird. Die Temperatur wird auf 30°C und der pH-Wert auf etwa 6,5 eingestellt. In den Oxidationsturm wird durch Leitung 22 Luft (100 Nm³/Stunde) eingeführt.

Aus dem Flüssigkeitsablauf werden stündlich 350–850 Liter einer 8 bis 18 gewichtsprozentigen Ammoniumsulfatlösung abgezogen. Das aus Leitung 23 entweichende Gas ist praktisch $SO_2$-frei und wird zweckmässigerweise dem Gasstrom 13 zugefügt.

Beispiel 2

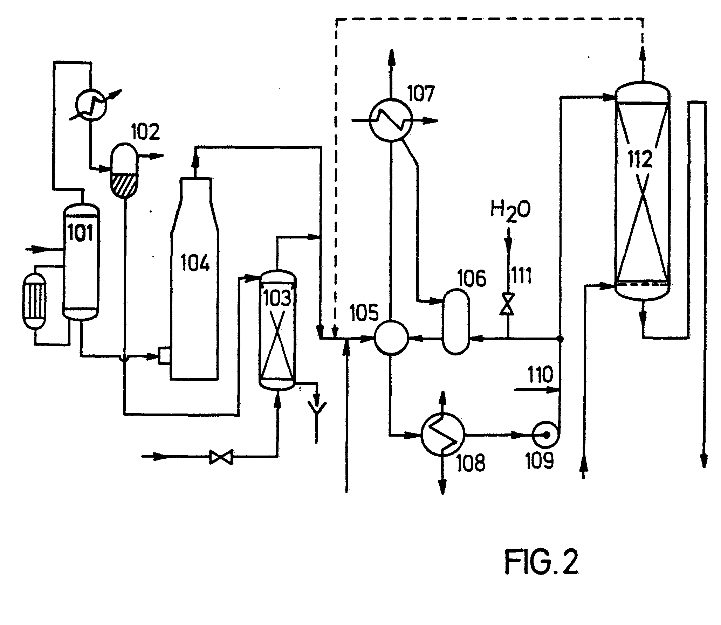

Aus einem chemischen Prozess fallen stündlich 2300 kg Abwässer an, die 0,78 Gewichtsprozent Schwefeldioxid enthalten. Zwecks Rückgewinnung der in dem Abwasser enthaltenen organischen Lösungsmittel wird gemäss Fig. 2 das Abwasser in der Kolonne 101 einer Wasserdampfdestillation unterworfen, das Kondensat in der Vorlage 102 gesammelt, in der sich die organische Phase von der wässerigen Phase abtrennt. In die wässerige Phase (400 kg/Stunde) werden in der Kolonne 103 in der gleichen Zeiteinheit 50 Nm³ Luft eingeblasen und so von gelöstem $SO_2$ befreit. Das schwefeldioxidhaltige Abgas wird dem Saugstrahler 105 zugeführt.

Das aus der Kolonne 101 abgezogene Abwasser (1900 kg/Std.) wird der Verbrennungsanlage 104 zugeführt, in der die S-haltigen Bestandteile zu $SO_2$ oxidiert werden (275 kg $SO_2$/Stunde). Das stündlich in einer Menge von 7000 Nm³ anfallende Rauchgas ($SO_2$-Gehalt 1,4 Vol.-%) wird mit dem aus Kolonne 103 stammenden Ausblasegas vereinigt und den vereinigten Gasen vor Eintritt in den Saugstrahler 105 3000–7000 Nm³/Stunde Luft zugesetzt. Das Gasgemisch hat vor Eintritt in den Saugstrahler eine Temperatur von etwa 200°C.

Die Gase werden in dem Saugstrahler innig mit einer im Kreislauf geführten Sulfit/Sulfatlösung (100 bis 200 m³/Stunde, $SO_4^-$-Gehalt 5,0 Gewichtsprozent, $SO_3^-$-Gehalt 2,2 Gewichtsprozent) vermischt. Der Kreislauf besteht im wesentlichen aus dem Saugstrahler 105, einem Wärmeaustauscher 108, der Pumpe 109 und dem Standgefäss 106. Dem Kreislauf wird in Abhängigkeit von der im Kreislauf geführten Flüssigkeitsmenge Ammoniak durch Leitung 110 zugeführt (150 kg/Std), um in der Flüssigkeit einen pH-Wert von 6,5 aufrechtzuerhalten. Der Wasserstand im Standbehälter wird durch Zugabe von Wasser bei 111 konstant gehalten. Die Temperatur der Kreislaufflüssigkeit vor dem Saugstrahler beträgt 60°C.

Im Saugstrahler 105 wird das Schwefeldioxid dem Rauchgas entzogen, zunächst zu Sulfit/Bisulfit umgesetzt und zum überwiegenden Teil zu Sulfat oxidiert. Das entschwefelte Rauchgas sowie die Luft verlassen den Strahler mit Wasserdampf gesättigt.

Im Kühler 107 werden 20% des Wasserdampfes kondensiert und in den Standbehälter 106 zurückgeführt. Stündlich wird aus dem Kreislauf eine Flüssigkeitsmenge von 5 m³ ausgeschleust und in einen mit Füllkörpern beschickten Oxidationsturm 112 eingeführt, in dessen unteren Teil in der gleichen Zeiteinheit 700–1000 Nm³ Luft eingeführt werden. Das Abgas aus dem Oxidationsturm enthält weniger als 1% $SO_2$, die in einer Menge von 5 m³ abgezogene Flüssigkeit 604 kg Ammoniumsulfat/Stunde und weniger als 0,1% $SO_3^-$. Zweckmässigerweise wird das Abgas aus 112 dem Rauchgas vor Eintritt in 105 beigemischt.

**Patentansprüche**

1. Verfahren zur Entfernung von Schwefeldioxid aus Schwefeldioxid enthaltenden Abwässern unter Gewinnung von wässrigen Lösungen von Ammonium- oder Alkalisulfaten, dadurch gekennzeichnet, dass man aus den Abwässern das Schwefeldioxid ausbläst, aus den hierbei erhaltenen schwefeldioxidhaltigen Ausblasegasen, die Luft enthalten, in einer im Kreislauf geführten wässrigen Ammonium- oder Alkali-Sulfit/-Sulfat enthaltenden Lösung, deren pH-Wert durch Zusatz von Ammoniak oder Alkalihydroxiden auf einem Wert von 5 bis 7 gehalten wird, bei Temperaturen von oberhalb 15°C bis zum Siedepunkt in einer Zone hoher Flüssigkeitsturbulenz, wie sie bei der Vermischung in Saugstrahlern oder Wasserringpumpen gewährleistet ist, das Schwefeldioxid absorbiert und teilweise oxidiert, aus dem Kreislauf Lösung abzieht und durch frische Lösung ergänzt und das in der abgezogenen Lösung nicht zu Sulfat oxidierte Sulfit in einer weiteren Stufe mit sauerstoffhaltigen Gasen zu Sulfat oxidiert und die erhaltene sulfathaltige Lösung abzieht.

2. Verfahren nach Anspruch 1, dadurch gekennzeichnet, dass man das schwefeldioxidhaltige Ausblasegas vor der Absorption in den Sulfit/Sulfat enthaltenden Lösungen mit anderen schwefeldioxidhaltigen Gasen versetzt.

3. Verfahren nach Ansprüchen 1 und 2, dadurch gekennzeichnet, dass man das Schwefeldioxid mit Luft ausbläst.

4. Verfahren nach Anspruch 3, dadurch gekennzeichnet, dass man für das Ausblasen der Abwässer so viel Luft verwendet, dass der Sauerstoffgehalt ausreicht, um bei der Absorption das Sulfit zu Sulfat zu oxidieren.

## Claims

1. A process for removing sulfur dioxide from waste water containing sulfur dioxide, giving an aqueous solution of ammonium sulfate or alkali metal sulfates, characterized in that the sulfur dioxide is flushed out of the waste water and is absorbed from the resulting sulfur dioxide-containing gas, which contains air, in a recycled aqueous solution containing ammonium sulfite and sulfate or an alkali metal sulfite or sulfate, the pH of which is kept at from 5 to 7 by adding ammonia or alkali metal hydroxide, in a zone of high liquid turbulence, as is ensured by mixing in ejectors or water ring pumps, at from above 15 °C to the boiling point of the solution, and is partially oxidized therein, solution is taken off the circulation system and is replaced by fresh solution, and the sulfite, not yet oxidized to sulfate, contained in the solution taken off is oxidized to sulfate with an oxygen-containing gas in a subsequent stage, and the resulting solution containing sulfate is taken off.

2. A process as claimed in claim 1, characterized in that the flushing gas, containing sulfur dioxide, is mixed with other gases containing sulfur dioxide before absorption in the sulfite-/sulfate-containing solutions.

3. A process as claimed in claims 1 and 2, characterized in that the sulfur dioxide is flushed out with air.

4. A process as claimed in claim 3, characterized in that such an amount of air is used for flushing the waste water that the oxigen content is sufficient to oxidize the sulfite to sulfate in the absorption stage.

## Revendications

1. Procédé d'extraction de l'anhydride sulfureux d'eaux résiduaires, qui en contiennent, avec obtention de solutions aqueuses de sulfates d'ammonium ou de métaux alcalins, caractérisé en ce que l'on chasse l'anhydride sulfureux des eaux résiduaires par insufflation d'un gaz, on absorbe l'anhydride sulfureux contenu dans le mélange gazeux obtenu, qui contient de l'air, dans une solution aqueuse contenant du sulfite/sulfate d'ammonium ou de métaux alcalins, qui circule en circuit fermé et dont le pH est maintenu par addition d'ammoniac ou d'hydroxydes de métaux alcalins entre 5 et 7, à une température comprise entre 15 °C et le point d'ébullition dans une zone de forte turbulence de la solution, telle qu'elle est assurée par des pompes à jet aspirant ou des pompes à anneau d'eau, cette absorption allant de pair avec une oxydation partielle de l'anhydride sulfureux, on soutire du circuit une fraction de la solution, remplacée par de la solution fraîche, et on oxyde le sulfite non oxydé en sulfate dans la solution soutirée dans un stade supplémentaire à l'aide de mélanges gazeux renfermant de l'oxygène pour obtenir une solution renfermant du sulfate, qui est soutirée.

2. Procédé suivant la revendication 1, caractérisé en ce que l'on ajoute au mélange gazeux contenant l'anhydride sulfureux, provenant de l'insufflation, d'autres gaz contenant de l'anhydride sulfureux avant l'absorption dans la solution contenant du sulfite/sulfate.

3. Procédé suivant l'une des revendications 1 et 2, caractérisé en ce que le gaz d'insufflation pour l'entraînement de l'anhydride sulfureux est de l'air.

4. Procédé suivant la revendication 3, caractérisé en ce que le volume d'air insufflé dans les eaux résiduaires est tel que la teneur en oxygène est suffisante pour oxyder la totalité du sulfite présent dans le stade d'absorption en sulfate.

FIG.1

FIG.2